**Europäisches Patentamt**

**European Patent Office**

**Office européen des brevets**

(11) Veröffentlichungsnummer: **0 048 500**
**A1**

(12) # EUROPÄISCHE PATENTANMELDUNG

(21) Anmeldenummer: **81108227.0**

(22) Anmeldetag: **03.09.81**

(51) Int. Cl.³: **A 01 D 53/08**
**H 02 G 11/02**

(30) Priorität: **20.09.80 EP 80105665**

(43) Veröffentlichungstag der Anmeldung:
**31.03.82 Patentblatt 82/13**

(84) Benannte Vertragsstaaten:
**AT BE CH DE FR GB IT LI LU NL SE**

(71) Anmelder: **ADW-Wirtschaftsberatung und Vermittlungdienst GmbH**
**Bahnhofstrasse 60 Postfach 6307**
**D-4352 Herten-Westerholt(DE)**

(72) Erfinder: **van Assche, Viktor**
**Kaiserwall 28**
**D-4350 Recklinghausen(DE)**

(54) **Elektrisch betriebener Rasenmäher mit Kabelaufroller.**

(57) Elektrisch betriebener Rasenmäher mit Kabelaufroller (3) wobei an der Ankerwelle (5) des Elektromotors (2) eine Fliehkraftkupplung (7) angeordnet ist, welche einen steten dosierten Zug auf das Kabel (4) in Aufwicklungsrichtung ausübt.

Fig 1

EP 0 048 500 A1

**B E S C H R E I B U N G**
===========================

Die Erfindung bezieht sich auf einen elektrisch
betriebenen Rasenmäher, zum Aufnehmen des Stromkabels bei gleichzeitig zwangsläufiger Auf- und
Abrollung des Stromkabels.

Ein großes Problem bei elektrisch betriebenen
Rasenmähern stellt sich in der Nachführung des
Elektrokabels am Rasenmäher, da die Länge des
für einen Elektrorasenmäher verwendeten Kabels,
in Abhängigkeit der zu mähenden Fläche zu groß
ist. Die Verbindung zwischen dem zumeist am
Hause befindlichen Steckdosen und dem Rasenmäher
bewirken Kabel entsprechender Länge. Wird das
Kabel nicht stets exakt hinter dem Rasenmäher
nachgeführt, so ist die Gefahr groß, daß das
Elektrokabel aus Unachtsamkeit vom Rasenmäher
überfahren und das Kabel durch das Mähwerk beschädigt oder zerstört werden kann. Derartige
Unachtsamkeiten haben schon häufig zu ernsten
Unfällen geführt.

Aus diesem Grunde ist man dazu übergegangen,
Rasenmäher teilweise mit Kabelrollvorrichtungen
auszurüsten. Diese Kabelaufrollvorrichtungen
umfassen eine Trommel zum Aufwickeln des Kabels.
Diese Kabelaufrollvorrichtungen beeinträchtigen das Hantieren eines derartigen Rasenmähers
nicht, da diese mit einer elektromagnetischen
Motorsteuerung versehen sind, welche das Abwikkeln des Kabels beim Verfahren des Rasenmähers
zuläßt, aber andererseits das Kabel immer dann selbsttätig aufwickeln, wenn das Kabel schlaff
durchhängt.

Hierdurch ist die Gefahr weitgehend ausgeschlossen, daß das Elektrokabel aufgrund einer Unachtsamkeit seitens der den Rasenmäher bedienenden
Person beschädigt und diese ernsthaft gefährdet
wird. Allerdings ist der für eine elektromagnetische Motorstreuung zu treffende Schaltungsaufwand beträchtlich, so daß hierdurch insgesamt die Herstellung eines Rasenmähers erheblich
verteuert wird. Zudem sind die Wartungs- und
Reparaturarbeiten schwierig.

Ausgehend von diesem Stand der Technik liegt
der Erfindung die Aufgabe zugrunde, einen elektrisch betriebenen Rasenmäher derart zu verbessern, daß das Auf- und Abwickeln eines Stromkabels mit baulich einfachen Maßnahmen erfolgt,
welche nachträgliche Wartung einfach ausschalten, da keine mechanischen Teile Verwendung
fanden, ebensowenig irgendwelche Schaltvorrichtungen. Gleichzeitig soll die Fertigung verbilligt werden.

Diese Aufgabe wird erfindungsgemäß durch die
in Anspruch 1 angegebene Maßnahme gelöst, wobei
zweckmäßige Ausgestaltung in den Unteransprüchen
enthalten sind.

Die nach Maßgabe der Erfindung vorgesehene
Fliehkraftkupplung bewirkt, daß während des
Motorumlaufs zum Betreiben des Mähwerks ein steter
Zug auf das zum Elektrorasenmäher führende Kabel in Aufwicklungsrichtung ausgeübt wird. Die
Fliehkraftkupplung ermöglicht es also einerseits, das Kabel auf entsprechende Längen abzuwickeln, wie sie für den Mähbetrieb gerade gebraucht werden, und verhindert andererseits ein
schlaffes Herabhängen des Kabels und die Ausbildung von am Boden liegenden Schlaufen, so daß
die Gefahr des Überfahrens des Elektrokabels
während des Mähens, also bei der Hin- und Herbewegung des Rasenmähers, weitgehend ausgeschlossen ist. Dabei kommt die Fliehkraftkupplung ohne
irgendwelche schalttechnische Maßnahmen aus,
so daß für Wartungsarbeiten keine speziellen
Kenntnisse erforderlich sind. Als Fliehkraftkupplung
für die Kabelaufrollvorrichtung eines Rasenmähers
eignet sich insbesondere eine Kupplung mit Magnetblöcken, ohne jegliche Berührung mechanischer
Teile. Dadurch entsteht keine Wärme durch Reibung. Die Aufhängung der Kabelaufrolltrommel
ist mittels Kugel- und/oder Nadellager an der
verlängerten Motorwelle beweglich angeordnet.
In der Innenbodenscheibe der Kabelaufrolltrommel sind mehrere Magnetblöcke befestigt. Die
über diese Innenbodenscheibe der Kabeltrommel,
fest an der Motorwelle verbundene zweite Scheibe, welche über die Magnetblöcke rotiert, nimmt
durch die magnetische Kraft die Kabeltrommelaufrollvorrichtung mit. Dadurch entsteht ein
steter Zug auf das Stromkabel, entsprechend erforderlich um beim Mähen das Stromkabel stramm
zu halten, nach Bedarf auf- und abzuwickeln.

Nachfolgend wird ein Ausführungsbeispiel anhand
der Zeichnung beschrieben. Darin zeigt

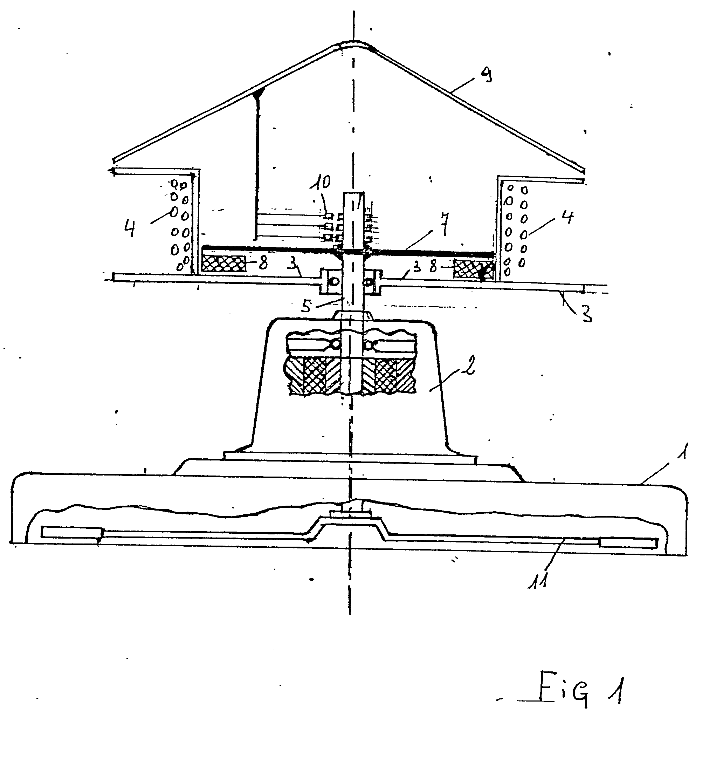

> Figur 1   eine schematisch gehaltene Schnitt-
> schicht eines Rasenmähers gemäß
> der Erfindung.

Der in Figur dargestellte Rasenmäher (1) umfaßt
einen nicht näher dargestellten Elektrorasenmähermotor (2), welcher an Chassis (1) des Rasenmähers befestigt ist und dessen Ankerwelle
(5) an beiden Seiten des Motors (2) vorsteht.
Am unteren Ende der Ankerwelle (5) ist das
Mähwerk angeordnet, welches in der dargestellten
Ausführungsform ein Schneidemesser (11) ist.
Das Schneidemesser (11) ist innerhalb des
Chassis (1) des Rasenmähers versenkt angeordnet, um die Verletzungsgefahr zu vermindern.

Am anderen Ende der Ankerwelle (5) befindet
sich die Magnetkupplung (3-8-7), die nachstehend
näher beschrieben wird. Die Magnetkupplung setzt
sich im wesentlichen aus einer frei auf der
Ankerwelle (5) drehenden Scheibe (3), welche
die Kabeltrommel hält, und welche auf der Bodeninnenplatte (3) im Kreise mehrere Magnetblöcke
(8) befestigt sind. Über diese freidrehende
Kabeltrommelscheibe (3) bewegt sich, schnell
rotierend, die mit der Motorwelle (5) fest verbundene Antriebsscheibe (7) welche bedingt durch
das magnetische Feld, von den Magnetblöcken (8)
erzeugt wird, die Kabeltrommelscheibe (7) eine
Drehbewegung besorgt ohne Schleifvorrichtung.

Im dargestellten Ausführungsbeispiel wird die
Scheibe (7) als Antrieb auf die Kabeltrommelscheibe (3) als Energieträger gezeigt.

Anstelle der beschriebenen Kupplung, die sich
besonders für einen Rasenmäher eignet, kann auch
eine andere mechanische Reibkupplung oder hydraulische Kupplung verwendet werden.

0048500

Herten, 24. August 1981

ADW Wirtschaftsberatung und Vermittlungsdienst GmbH
Bahnhofstr. 60, 4352 Herten-Westerholt
----------------------------------------------------

Elektrisch betriebener Rasenmäher mit Kabelaufroller
----------------------------------------------------

P a t e n t a n s p r ü c h e
=============================


1) Elektrisch betriebener Rasenmäher mit auf
einem Mähergehäuse (1) angeordnetem Elektromotor (2) und eine Kabelaufrollvorrichtung (3)
zum Aufnehmen des Stromkabels (4), welche eine
an der verlängerten Motorwelle vom Elektromotor
angeordnete Trommel (3) zum Auf- und Abwickeln
des Kabels umfaßt,

d a d u r c h   g e k e n n z e i c h n e t

daß die Kabelaufrollvorrichtung eine an der
Motorwelle (5) des Elektromotors (2) angeordnete Fliehkraftkupplung (7) aufweist, welche
einen steten Zug auf das Kabel (4) in die Auf-
und Abwicklung ausübt.

2) Elektrisch betriebener Rasenmäher nach Patentanspruch 1

d a d u r c h   g e k e n n z e i c h n e t

daß die Kabelaufrollvorrichtung (3) auf der
verlängerten Motorwelle (5) drehbar gelagert
ist.

3) Elektrisch betriebener Rasenmäher nach Patentansprüchen 1 und 2

d a d u r c h   g e k e n n z e i c h n e t

daß in der Bodenplatte der Kabelaufrollvorrichtung (3) mehrere Magnetblöcke (8) fest verankert sind und zwar in dem äußeren Rand der
Bodenplatte.

4) Elektrisch betriebener Rasenmäher nach Patentansprüchen 1, 2 und 3

d a d u r c h   g e k e n n z e i c h n e t

daß eine glatte Scheibe (7) fest mit der Motorwelle verbunden ist und so angeordnet, daß diese Scheibe (7) nur einen geringen Abstand zu den Magnetblöcken (8) hat, welche auf dem Innenboden (3) der Kabelaufrollvorrichtung befestigt sind.

5) Elektrisch betriebener Rasenmäher nach Patentansprüchen 1, 2, 3 und 4

d a d u r c h   g e k e n n z e i c h n e t

daß die glatte Scheibe (7) welche mit der Motorwelle fest verbunden ist, sich rotierend über die Magnetblöcken (8) bewegt und durch magnetische Übertragung die Kabelaufrollvorrichtung (3) langsam mitnimmt, um somit das Auf- und Abrollen des Stromkabels (4) zu gewährleisten.

6) Elektrisch betriebener Rasenmäher nach Patentansprüchen 1, 2, 3, 4 und 5

d a d u r c h   g e k e n n z e i c h n e t

daß auf der verlängerten Motorwelle (5), fest an der Scheibe (7) handelsübliche Schleifringe befestigt sind und an der Abdeckhaube (9) Kohlenbürsten (10) angeordnet sind, zwecks Stromübertragung vom Kabel zum Elektromotor.

Fig 1

**0048500**
Nummer der Anmeldung
EP 81 10 8227

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 507 426 (WOLF)<br><br>* Seite 3, Zeile 8 - Seite 4, Zeile 17; Ansprüche 4,6,7 *<br><br>: -- | 1,2-4, 6 |
| X | DE - A - 1 507 425 (WOLF)<br><br>* Seite 5, Zeile 1 - Seite 7, Zeile 5; Ansprüche 2,3 *<br><br>-- | 1-4 |
|  | FR - A - 1 259 328 (BROZIAT)<br><br>* Seite 2, linke Spalte, Zeile 51 - Seite 2, rechte Spalte, Zeile 22 *<br><br>---- | 1,4,6 |

**KLASSIFIKATION DER ANMELDUNG (Int. Cl.³)**

A 01 D 53/08
H 02 G 11/02

**RECHERCHIERTE SACHGEBIETE (Int. Cl.³)**

A 01 D
H 02 G

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-12-1981 | DE LAMEILLEURE |

EPA form 1503.1 06.78